# EUROPEAN PATENT APPLICATION

(11) **EP 4 434 611 A2**
(43) Date of publication of application: **25.09.2024**
(21) Application number: 24153875.0
(22) Date of filing: 25.01.2024
(51) Int. Cl.: B01D 63/04, B01D 61/18, B01D 61/20, B01D 63/02, B01D 65/02, B01D 65/08, B01F 23/231, C02F 3/12, C02F 3/20

(54) **AERATOR, SUBMERSED MEMBRANE MODULE AND SUBMERSED MEMBRANE FILTRATION APPARATUS CONTAINING SAME**

(30) Priority: 22.03.2023 CN 202310281807; 17.05.2023 CN 202321198900 U
(71) Applicant: Hainan Litree Purifying Technology Co., Ltd, Haikou National High-Tech Zone Haikou Hainan 571137 (CN)
(72) Inventor: CHEN, Qing, HAINAN (CN); CHEN, Chen, HAINAN (CN); CHEN, Lianggang, HAINAN (CN)
(74) Representative: Gevers & Orès

(57) **Abstract**

The present application relates to an aerator, a submerged membrane module and a submerged membrane filtration apparatus containing the same. There is provided an aerator, comprising: a body housing (1100) comprising a hollow inner cavity (1103) and an opening provided at a bottom (1102) of the body housing in communication with the inner cavity; an aeration pipe (111) running through a top (1101) of the body housing and communicated with the inner cavity; and a gas conduit (1200) provided inside the inner cavity, wherein one end of the gas conduit runs through the top, and another end of the gas conduit is provided close to the bottom, wherein a gas intake passage (1201) is provided within the gas conduit and extends linearly through both ends of the gas conduit, and wherein a side gas hole (1202) is provided at a side wall of the gas conduit and communicated with the gas intake passage. There are further provided a submerged membrane module and a submerged membrane filtration apparatus containing the same.

## Description

### Technical Field

The present application pertains to the technical field of water treatment, and relates to an aerator, a submerged membrane module and a submerged membrane filtration apparatus containing the same.

### Background Art

The selective separation feature of the membrane separation technology enables its wide use in the water treatment industry.

According to the membrane bioreactor technology, a filter membrane element is disposed in a bioreactor, and most of the pollutants will be removed by the activated sludge in the mixed liquid. Then, filtered water is produced by the filter membrane disposed in the bioreactor, thereby realizing water regeneration and reuse.

In the existing membrane bioreactors, an aeration device is used to generate bubbles, and the impact force generated when the bubbles rupture causes flushing of the surface of the hollow fiber membrane. The flushing exfoliates the sludge adhered to the hollow fiber membrane, and thus the filtration efficiency is improved.

However, the existing aeration device includes a gas conduit for supplying bubbles. Due to downtime or long-term flowing of sewage through the gas conduit, solid impurities tend to form on the inner wall of the gas conduit due to scaling, such that the gas inlet hole of the gas conduit is clogged by the detached solid impurities, resulting in aeration failure. If multiple gas inlet holes are used for aeration, although aeration can proceed, the gas inlet holes clogged by the solid impurities still cannot work for aeration. This will lead to nonuniform gas intake from the aerator and undesirable gas scrubbing effect.

At present, the water purification apparatus based on the membrane separation technology mainly include pressure membrane filtration apparatus and submerged membrane filtration apparatus. The submerged membrane filtration apparatus includes a frame and a plurality of membrane elements disposed on the frame, wherein the plurality of membrane elements are arranged in a matrix form. Each membrane element is provided with a water output port, and the water output ports in the same column are communicated with a branch water output pipe.

However, the matrix of membrane elements includes multiple columns. Then, each of the membrane elements in the same row is communicated with a separate branch water output pipe. Thus, the above design involves a large number of branch pipes in the water output pipeline, such that the pipeline design is complex, and, in turn, the manufacturing cost is high, and the installation is cumbersome.

### Summary

A first technical problem solved the present application is to provide an aerator that can solve the problem of clogging of the gas conduit by solid impurities.

A second technical problem solved the present application is to provide a submerged membrane module that can solve the problem of poor gas scrubbing effect.

A third technical problem solved the present application is to provide a submerged membrane filtration apparatus that can solve the problem of complex pipeline layout in the existing submerged membrane filtration apparatus.

The first technical problem is solved by the following technical solution:
An aerator, comprising:
a body housing comprising a hollow inner cavity and an opening provided at a bottom of the body housing in communication with the inner cavity;
an aeration pipe running through a top of the body housing and communicated with the inner cavity; and
a gas conduit provided inside the inner cavity, wherein one end of the gas conduit runs through the top, and another end of the gas conduit is provided close to the bottom, wherein a gas intake passage is provided within the gas conduit and extends linearly through both ends of the gas conduit, and wherein a side gas hole is provided at a side wall of the gas conduit and communicated with the gas intake passage.

In the aerator according to the above embodiment, the gas conduit runs through the top and extends to the bottom, such that the gas conduit is provided vertically within the body housing. The gas intake passage in the gas conduit has a cylindrical shape. The side gas hole is provided at the side wall of the gas conduit, such that after the solid impurities on the inner wall of the gas conduit fall off, they will slide down along the gas intake passage under gravity, and finally be discharged from the lower end of the gas conduit, thereby preventing the solid impurities from clogging the side gas hole.

In one embodiment, the aerator further comprises an aeration cup provided inside the inner cavity, wherein the aeration cup is provided to enclose an end of the aeration pipe that is distal from the top, wherein a flowing passage is formed between an inner wall of the aeration cup and the aeration pipe.

In one embodiment, at least two aeration pipes are provided at and run through the top, and an aeration cup is provided to enclose ends of a plurality of aeration pipes.

In one embodiment, the gas conduit is provided close to a side wall of the inner cavity, and the side gas hole is provided to face the aeration pipe.

In one embodiment, the other end of the gas conduit extends to the opening of the bottom. The lower the lower end of the gas conduit, the greater the intake gas pressure that can be endured. However, if the lower end of the gas conduit is lower than the bottom, there is a risk that bubbles might escape from the body housing when they are discharged from the lower end of the gas conduit. Thus, with the provision that gas does not escape from the body housing, the lower end of the gas conduit extends as close to the plane of the bottom as possible to maximize the flow rate of the intake gas through the gas conduit.

In one embodiment, an end face of the other end of the gas conduit is a slope, wherein the slope is inclined inward of the inner cavity with respect to a plane of the opening, and the slope and the side gas hole face the same side of the gas conduit. As the end face of the other end of the gas conduit is a slope, the gas discharged from the slope of the gas conduit diffuses from the side close to the aeration pipe, such that the gas enters the inner cavity of the body housing directly, avoiding waste of the gas that escapes away otherwise.

In one embodiment, an open area of the gas intake passage is larger than an open area of the side gas hole.

The second technical problem is solved by the following technical solution:
A submerged membrane module, comprising:
a hollow fiber membrane;
an upper water collection unit and a lower water collection unit coupled to two ends of the hollow fiber membrane respectively; and
the aerator in any of the above embodiments, wherein the aerator is coupled to a lower end of the lower water collection unit.

The submerged membrane module of the above embodiment comprises the aerator of the present application. Hence, the submerged membrane module of the present application can achieve the same beneficial effects as the aerator provided according to the preceding embodiments.

In one embodiment, the upper water collection unit comprises a gas intake pipe in communication with the gas conduit, wherein an axis of the gas intake pipe and an axis of the gas conduit extend along the same straight line.

In one embodiment, the module further comprises a support rod located between and coupled to the upper water collection unit and the lower water collection unit.

The third technical problem is solved by the following technical solution:
A submerged membrane filtration apparatus, comprising a frame, at least one membrane element set, a water output pipeline, and a connecting pipe set, wherein
the membrane element set comprises a plurality of membrane elements distributed in a first direction and provided within the frame, wherein an upper end of each of the membrane elements is provided with a water output port used to output filtered water that is filtered by the membrane element;
the water output pipeline comprises at least one branch water output pipe fixed to the frame;
the connecting pipe set comprises a water output tee pipe in communication with two adjacent water output ports and the branch water output pipe respectively, wherein the water output tee pipe is used to gather and transport the filtered water to the branch water output pipe.

In one embodiment, the apparatus further comprises an aeration pipeline, and the connecting pipe set further comprises an aeration tee pipe, wherein
the aeration pipeline comprises at least one branch gas intake pipe provided within the frame;
the upper end of each of the membrane elements is further provided with an aeration gas inlet spaced from the water output port and used to input a first gas for scrubbing the membrane element;
two aeration gas inlets of two adjacent membrane elements in the first direction are disposed adjacent to each other; and/or the water output ports of two adjacent membrane elements in the first direction are disposed adjacent to each other;
the aeration tee pipe is communicated with two adjacent aeration gas inlets and the branch gas intake pipe respectively for dividing and transporting the first gas in the branch gas intake pipe to the aeration gas inlets.

In one embodiment, the branch water output pipe is provided with at least one water intake pipe in communication therewith, wherein the water output tee pipe is communicated with two adjacent water output ports and the water intake pipe respectively; and the branch gas intake pipe is provided with at least one gas delivery pipe in communication therewith, wherein the aeration tee pipe is communicated with two adjacent aeration gas inlets and the gas delivery pipe respectively.

In one embodiment, there are a plurality of membrane element sets laid out in a second direction perpendicular to the first direction, wherein the branch water output pipe is provided with a plurality of water intake pipes distributed in the second direction, wherein the water output ports of the membrane elements laid out in the second direction correspond to the water intake pipes of the same branch water output pipe one by one, wherein the branch gas intake pipe is provided with a plurality of gas delivery pipes distributed in the second direction, wherein the aeration gas inlets of the membrane elements laid out in the second direction correspond to the gas delivery pipes of the same branch gas intake pipe one by one.

In one embodiment, the apparatus further comprises a connecting pipeline comprising a first pipeline and a second pipeline fixed to and spaced apart in the frame, wherein both the branch water output pipe and the branch gas intake pipe are installed between and coupled to the first pipeline and the second pipeline.

In one embodiment, the first pipeline is a main water output pipe, wherein one end of the branch water output pipe is communicated with the first pipeline, and another end of the branch water output pipe is fixed to but not communicated with the second pipeline, wherein the main water output pipe is used to gather the filtered water from the branch water output pipe.

In one embodiment, the second pipeline is a main gas intake pipe, wherein one end of the branch gas intake pipe is communicated with the second pipeline, and another end of the branch gas intake pipe is fixed to but not communicated with the first pipeline, wherein the main gas intake pipe is used to deliver the first gas to the branch gas intake pipe.

In one embodiment, both the first pipeline and the second pipeline are main water output pipes, wherein one end of the branch water output pipe is communicated with the first pipeline, and another end of the branch water output pipe is communicated with the second pipeline, wherein two ends of the branch gas intake pipe are fixed respectively to but not communicated with the first pipeline and the second pipeline.

In one embodiment, the connecting pipeline further comprises a third pipeline fixed to the frame and extending in the first direction, wherein the third pipeline is a main gas intake pipe located above the branch gas intake pipe, wherein the third pipeline is communicated with the branch gas intake pipe.

In one embodiment, the water output tee pipe comprises a first water output main pipe and two first water output sub-pipes, wherein the two first water output sub-pipes are provided on a wall of the first water output main pipe and spaced apart from each other, and they are communicated with the first water output main pipe.

In one embodiment, the membrane element comprises an upper end cap, a hollow fiber membrane and the aerator of any of the above embodiments, disposed in sequence.

### Beneficial effects:

(1) In the aerator of the present application, the gas intake passage in the gas conduit vertically disposed in the body housing has a cylindrical shape, and the side gas hole is provided at the side wall of the gas conduit. So, when the solid impurities fall off the inner wall of the gas conduit, they will fall down along the gas intake passage under gravity, and be discharged from the gas conduit eventually. Hence, the solid impurities are prevented from clogging the side gas hole. This can solve the problem of clogging of the gas conduit by the solid impurities.
(2) The submerged membrane module of the present application can solve the problem of poor gas scrubbing effect.
(3) The problem of complex pipeline layout in the prior art submerged membrane filtration apparatus can be solved by the submerged membrane filtration apparatus of the present application with the use of a water output tee pipe that communicates each two adjacent membrane elements arranged in the first direction in a membrane element set with one branch water output pipe. As compared with the prior art in which each membrane element in the same row is communicated with a separate branch water output pipe, the number of the branch water output pipes is reduced, and the design of the pipeline is simplified. In turn, the installation is simplified, and the manufacturing cost is reduced.

### Description of the Drawings

Figure 1 is a schematic view showing the structure of the aerator provided according to one embodiment of the present application.
Figure 2 is a section view of the aerator provided according to one embodiment of the present application.
Figure 3 is an enlarged view of part A in Figure 2.
Figure 4 is a schematic view showing the gas flow in the aerator provided according to one embodiment of the present application.
Figure 5 is a schematic view showing the gas flow in the aerator provided according to another embodiment of the present application.
Figure 6 is a schematic view showing the gas flow in the aerator provided according to still another embodiment of the present application.
Figure 7 is a schematic view showing the structure of the submerged membrane module provided according to one embodiment of the present application.
Figure 8 is a schematic view showing the structure of the submerged membrane filtration apparatus provided according to one embodiment of the present application.
Figure 9 is a schematic view showing the structure of the submerged membrane filtration apparatus provided according to another embodiment of the present application.
Figure 10 is a schematic view showing the structure of the water output tee pipe provided according to one embodiment of the present application.

### Reference numbers:

213. aerator;
1100. body housing;
1101. top; 1102. bottom; 1103. inner cavity;
1200. gas conduit;
1201. gas intake passage; 1202. side gas hole; 1203. slope;
12031. acute angle side; 12032. obtuse angle side;
1300. aeration cup;
1301. flow passage; 1302. baffle;
111. aeration pipe;
1111. first bubble passage; 1112. second bubble passage;
130. upper water collection unit;
131. gas intake pipe; 132. water output pipe;
140. lower water collection unit;
150. support rod;
212. hollow fiber membrane;
10. submerged membrane filtration apparatus; a. first direction; b. second direction;
100. frame;
200. membrane element set; 210. membrane element; 211. upper end cap; 2111. water output port; 2112. aeration gas inlet;
300. water output pipeline; 310. branch water output pipe; 320. water intake pipe;
400. connecting pipe set; 410. water output tee pipe; 411. first water output main pipe; 412. first water output sub-pipe; 420. second tee pipe;
500. aeration pipeline; 510. branch gas intake pipe; 520. gas delivery pipe;
600. connecting pipeline; 610. first pipeline; 611. first connecting opening; 612. second blind hole; 620. second pipeline; 630. third pipeline; 640. fixing plate;
700. hoop; 800. flange connector; 900. lifting lug.

### Detailed Description

In order to make the above objects, features, and advantages of the present application more obvious and understandable, the specific embodiments of the present application will be illustrated in detail with reference to the accompanying drawings. A number of specific details are elaborated in the following description to enable full understanding of the present application. Nonetheless, the present application can be practiced in many ways different from those described herein, and those skilled in the art can make similar modifications without departing from the spirit of the present application. Therefore, the present application is not limited by the specific examples disclosed below.

In the description of the present application, it should be understood that if such terms as "center", "longitudinal", "lateral", "length", "width", "thickness", "upper", "lower", "front", "back", "left", "right", "vertical", "horizontal", "top", "bottom", "inside", "outside", "clockwise", "counterclockwise", "axial", "radial", "circumferential" and the like appear, the directional or positional relationship indicated by these terms is based on the directional or positional relationship shown in the accompanying drawings, only for the sake of facilitating description of the present application and simplifying the description, rather than indicating or implying that the apparatus or element referred to must have a particular orientation, be configured or operated in a particular orientation. Therefore, it should not be construed that the present application is limited by these terms.

In addition, if such terms as "first" and "second" appear, they are only used for the purpose of description, and cannot be construed as indicating or implying relative importance or implying the quantity of the technical features referred to. Thus, a feature defined by "first" or "second" may explicitly or implicitly include at least one such feature. In the description of the present application, if the term "a plurality of' appears, the meaning of "a plurality of' is at least two, such as two, three, etc., unless otherwise specified.

In the present application, unless otherwise specified or defined, if the terms "install", "couple", "connect", "fix", etc. appear, these terms should be interpreted broadly. For example, connection may be fixed connection, detachable connection, or integrated connection; it may be mechanical connection or an electrical connection; it may be direct connection or indirect connection via an intermediate medium; it may be internal communication between two elements or interaction between two elements, unless otherwise specified. For those skilled in the art, the specific meanings of the above terms in the present application can be understood in line with specific circumstances.

In the present application, unless otherwise specified or defined, if it's described that the first feature is "above" or "below" the second feature, the meaning may be direct contact between the first and second features, or indirect contact between the first and second features via an intermediate medium. Moreover, if the first feature is "on", "above", or "over" the second feature, the first feature may be exactly or inexactly above the second feature, or it only indicates that the first feature is higher than that of the second feature in terms of the horizontal level. If the first feature is "under", "below", or "underneath" the second feature, the first feature may be exactly or inexactly below the second feature, or it only indicates that the first feature is lower than that of the second feature in terms of the horizontal level.

It should be noted that if it's described that an element is "fixed to" or "provided on" another element, it may be directly on another element or there may be an intermediate element. If an element is considered to be "connected" to another element, it may be directly connected to another element or there may be an intermediate element at the same time. If present, the terms "vertical", "horizontal", "up", "down", "left", "right" and similar expressions used in the present application are for the illustrative purpose only and do not imply that they are the exclusive embodiments.

Now the accompanying drawings will be referred to.

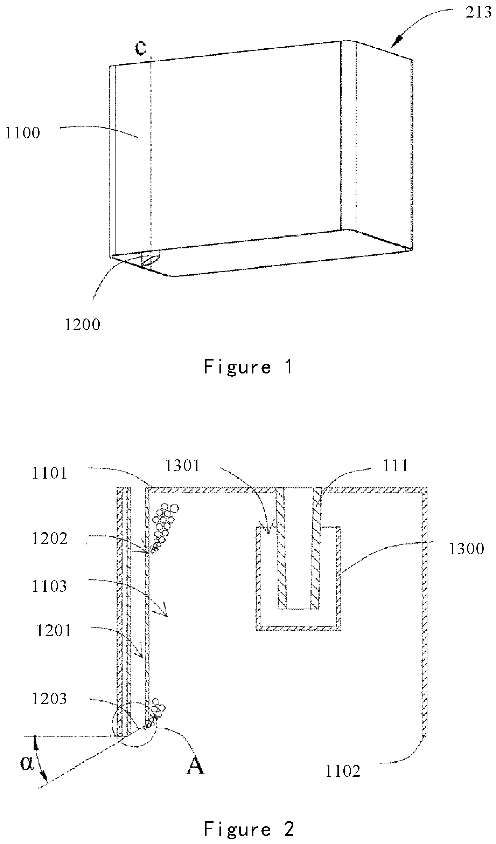

Figure 1 is a schematic view showing the structure of the aerator provided according to one embodiment of the present application. Figure 2 is a section view of the aerator provided according to one embodiment of the present application. As shown by Figures 1 to 2, the aerator 213 of the present application comprises: a body housing 1100, an aeration pipe 111, an aeration cup 1300, and a gas conduit 1200, wherein the body housing comprises a top 1101 and a bottom 1102; a hollow inner cavity 1103 is provided within the body housing; and an opening in communication with the inner cavity is formed at the bottom of the body housing. When the aerator is submerged in a mixed liquid, the mixed liquid can fill the inner cavity from the opening. The aeration pipe is fixed to and runs through the top of the body housing, such that the aeration pipe is communicated with the inner cavity. At the same time, the aeration cup is located in the inner cavity, and a flow passage 1301 is formed between the aeration cup and the aeration pipe. The gas conduit includes a gas intake passage 1201 therein, wherein the gas intake passage runs through both ends of the gas conduit in a linear direction c. One end of the gas conduit runs through the top, and the other end of the gas conduit is close the bottom, such that the gas intake passage in the gas conduit is in a shape of a cylinder. The side wall of the gas conduit is provided with a side gas hole 1202 in communication with the gas intake passage, and the side gas hole is located within the inner cavity. The end face of the other end of the gas conduit is a slope 1203 which slants with respect to the plane of the bottom. An included angle α is formed between the slope and the end face of the bottom, wherein α is in the range of 10°-60°. The slope is inclined inward of the inner cavity with respect to the plane of the opening, and the slope and the side gas hole 1202 face the same side of the gas conduit. If the flow rate of the gas that is input into the aerator is so large that the intake gas pressure exceeds the maximum pressure that can be endured by the gas conduit, the gas will escape from the end of the gas conduit at which the slope is provided, and diffuse out of the aerator. The slope of the gas conduit faces the aeration pipe 11 in the body housing.

In the present application, the intermittent aeration process of the aerator is as follows: when gas is introduced into the gas intake passage from the upper end of the gas conduit of the aerator, the gas can enter the inner cavity through the side gas hole, and then the gas in the inner cavity accumulates at the top end of the inner cavity. In other words, the gas accumulates near the top. As more and more gas accumulates in the inner cavity, the space occupied by the gas increases gradually. The mixed liquid in the inner cavity is gradually pressed out from the opening, such that the liquid level in the inner cavity decreases gradually. When the liquid level in the inner cavity is lower than the lower end face of the aeration pipe, the gas is pressed into the aeration pipe. The gas in the aeration pipe is released abruptly so that bubbles having a certain impact force are released from the aeration pipe. After the release, the mixed liquid fills the inner cavity again. At this time, the aeration pipe does not release gas. As such, by transporting gas continuously into the aerator through the gas conduit, the aeration pipe releases gas intermittently, resulting in intermittent aeration of the aerator.

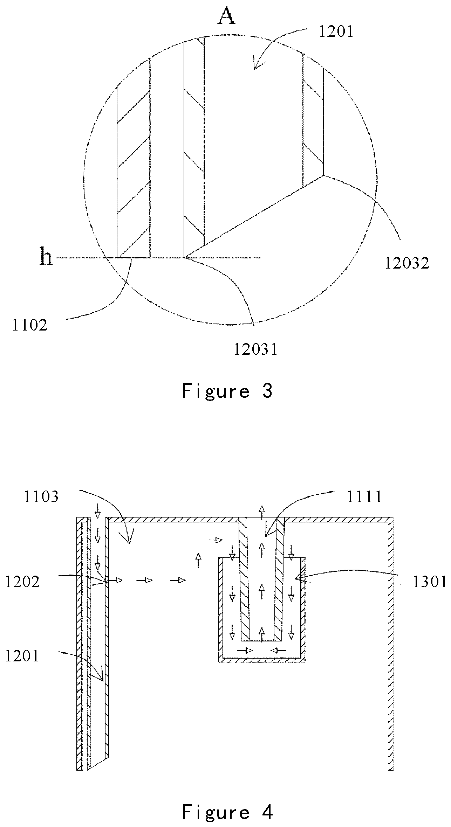

Figure 3 is an enlarged view of part A in Figure 2. As shown by Figure 3, the bottom end of the gas conduit extends to the opening of the bottom 1102. The end face of the bottom end of the gas conduit flushes with the end face of the bottom. When gas is transported into the aerator, due to the effect of gas pressure, a portion of the liquid in the gas conduit is discharged from the lower end as the gas enters the inner cavity of the body housing through the side gas hole. The lower the lower end face of the gas conduit, the higher the intake gas pressure that can be endured. In other words, as long as the gas does not escape from the lower end of the gas conduit, the depth of the lower end face of the gas conduit in the liquid determines the allowable flow rate of the intake gas. Therefore, the lower end face of the gas conduit flushes with the lower end face of the body housing to maximize the allowable flow rate of the gas entering the gas conduit. The slope includes an acute angle side 12031 and an obtuse angle side 12032. The acute angle side and the obtuse angle side are opposite to each other. In the direction from the acute angle side to the obtuse angle side, the slope extends gradually toward the inner cavity 1201. The acute angle side flushes with the end face of the bottom, and the obtuse angle side is higher than the end face of the bottom. That is, the obtuse angle side is located in the inner cavity. The gas escaping from the slope escapes from the obtuse angle side, such that the escaping gas enters the inner cavity of the body housing directly, avoiding waste of the escaping gas. The gas can be used to form bubbles, such that energy is saved. The included angle α between the slope and the end face of the bottom determines the distance from the obtuse angle side to the end face of the bottom. The larger the included angle α between the slope and the end face of the bottom, the larger the distance from the obtuse angle side to the end face of the bottom. A larger distance from the obtuse angle side to the end face of the bottom has an impact on the allowable flow rate of the gas entering the gas conduit. On the other hand, the smaller the distance from the obtuse angle side to the end face of the bottom, the more easily the bubbles escape out of the body housing. In order to achieve a larger allowable flow rate of the gas entering the gas conduit and render escape of bubbles from the body housing harder, the included angle α between the slope and the end face of the bottom is set in the range of 20° to 45°.

Further, referring to Figure 4, it is a schematic view showing the gas flow in the aerator provided according to one embodiment of the present application. As shown by Figure 4, the lower end of the aeration pipe extends into the aeration cup, such that a flow passage is formed between the aeration cup and the aeration pipe. When the liquid level in the inner cavity 1103 is lower than the upper end face of the aeration pipe, the mixed liquid gathered in the flow passage is pressed into the aeration pipe and discharged through a first bubble passage 1111. When the liquid level in the inner cavity is lower than the lower end face of the aeration pipe and the liquid level in the flow passage is lower than the lower end face of the aeration pipe, due to the siphon effect, the gas forms large bubbles which are released in the aeration pipe.

In the use of a traditional aerator, due to long-term existence of gas and/or liquid in the gas conduit, the mixed liquid tends to adhere to the inner wall of the gas conduit. As the gas stream passes by, the mixed liquid adhered to the inner wall of the gas conduit may be dewatered, leaving solid impurities on the inner wall. As the impurities adhered to the inner wall increase continuously, they may fall off under the action of an external force. The impurities that fall off may accumulate in the gas conduit, or enter the gas intake hole along with the gas stream and clog the hole, thereby affecting aeration of the aerator. In order to avoid clogging of the gas intake hole, it's necessary to clean the solid impurities in the gas conduit after the aerator is used for a period of time. This leads to poor user experience.

In the present application, since the gas intake passage 1201 in the gas conduit has a shape of a cylinder that extends linearly, the impurities that fall off go down the gas intake passage under gravity and exit from the lower end of the gas conduit. Because the side gas hole 1202 is located at the side wall of the gas intake passage, the falling impurities cannot enter the side gas hole easily. Thus, the impurities in the gas conduit can leave the gas conduit by themselves, and clogging of the side gas hole is prevented. As such, it's not necessary to clean the gas conduit frequently, thereby improving user experience.

The two ends of the gas conduit are the upper end and the lower end respectively. The gas conduit runs through the top. The upper end of the gas conduit extends to outside of the body housing, while the lower end of the gas conduit extends into the inner cavity. The lower end of the gas conduit approaches the bottom gradually. The axis of the cylindrical gas intake passage is parallel to the vertical line of the gas conduit, such that the gas intake passage is a linear passage perpendicular to the horizontal plane. When the solid impurities resulting from dewatering in the gas intake passage fall off, the impurities can fall down under gravity with no restriction from the gas intake passage, and leave the lower end of the gas conduit successfully.

The shape of the gas intake passage may be selected from a cylindrical shape or a rectangular shape, such that the gas conduit has a hollow structure that extends down vertically. Alternatively, the gas intake passage may have a taper shape, such that the area of the upper end of the gas intake passage is smaller than the area of the lower end of the gas intake passage. The gas intake passage may have any shape so long as the falling impurities are not restricted by the inner wall of the gas intake passage, and all such shapes are considered as specific embodiments of the present application.

More particularly, one end of the aeration pipe extends into the aeration cup, and a flow passage 1301 is formed between the aeration cup and the aeration pipe. Specifically, the aeration pipe extends into the aeration cup so that the lower end face of the aeration pipe is close to the bottom of the aeration cup, and there is a gap between the lower end face of the aeration pipe and the bottom of the aeration cup. By forming the flow passage between the aeration pipe and the inside of the aeration cup, the cross section of the flow passage has a U shape. The gas inlet of the aeration pipe is located at the lowest position of the flow passage in the vertical direction. In order to discharge the gas from the aeration pipe, it's necessary to press the mixed liquid from the aeration cup out the aeration pipe. Hence, as the gas pressure in the inner cavity increases, the volume of the gas discharged from the aeration pipe increases, and the bubbles increase. After the gas in the inner cavity is discharged from the aeration pipe, the siphon effect occurs in the aeration pipe and the flow passage, such that more gas is drawn. Thus, the mixed liquid refills the inner cavity, and the liquid level in the inner cavity rises till the mixed liquid flows into the aeration cup and seals the aeration pipe. Subsequently, the gas accumulates in the inner cavity once again.

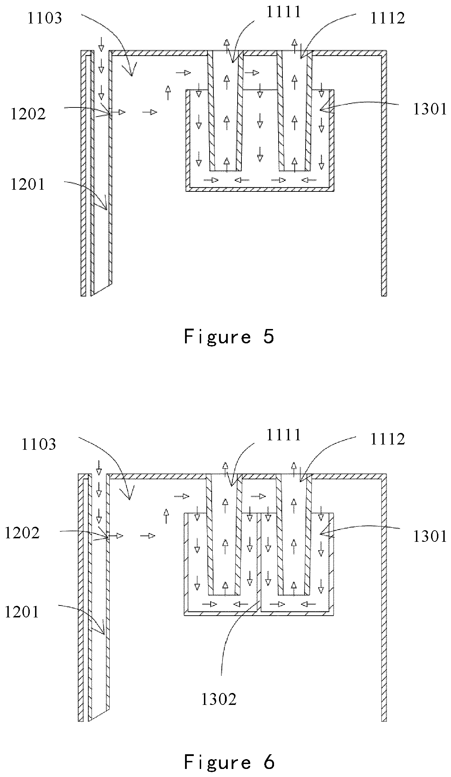

In another embodiment, referring to Figure 5, it is a schematic view showing the gas flow in the aerator provided according to another embodiment of the present application. Figure 5 is similar to Figure 4, except that at least two aeration pipes are provided and run through the top, while the aeration cup is provided at the ends of the plurality of aeration pipes. The plurality of aeration pipes simultaneously release bubbles which pass through a first bubble passage and a second bubble passage 1112 to accelerate release of the bubbles from the aeration pipes, thereby shortening the cycle period of bubble release, and promoting the cleaning efficiency. On the other hand, with the use of a plurality of aeration pipes to release bubbles, the bubbles released by different aeration pipes may be directed to different areas for cleaning. This not only increases the uniformity of the bubbles, but also increases the cleaning quality, resulting in better cleaning effect.

In an exemplary embodiment, the aerator is arranged horizontally. If the aerator is slanted, it will be difficult for the gas to be discharged from some of the aeration pipes, thereby affecting uniform release of the bubbles. Particularly, the horizontal arrangement of the aerator means that the end faces of the ends of the aeration pipes that extend into the aeration cup are located at the same level, and the underside of the aeration cup is parallel to the end faces of the ends of the aeration pipes that extend into the aeration cup.

In still another embodiment, referring to Figure 6, it is a schematic view showing the gas flow in the aerator provided according to still another embodiment of the present application. Figure 6 is similar to Figure 5, except that a baffle 1302 is positioned in the aeration cup to form a plurality of independent chambers, and the aeration pipes each extend into a respective chamber, such that independent flow passages are formed by the aeration pipes and the chambers. The flow passages separated by the baffle deliver gas independently, and thus the aeration pipes do not interfere with each other when they discharge gas.

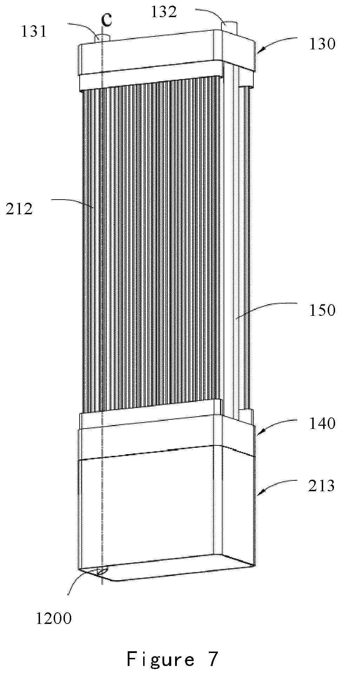

Figure 7 is a schematic view showing the structure of the submerged membrane module provided according to one embodiment of the present application. As shown by Figure 7, the submerged membrane module of the present application comprises: an aerator 213, an upper water collection unit 130, a lower water collection unit 140, and a hollow fiber membrane 212, wherein the upper water collection unit and the lower water collection unit are coupled to two ends of the hollow fiber membrane respectively, and the aerator is coupled to the lower end of the lower water collection unit.

Particularly, the upper water collection unit comprises a gas intake pipe 131 in communication with the gas conduit 1200, and a water output pipe 132, wherein the water output pipe is communicated with the hollow fiber membrane, such that the liquid filtered by the hollow fiber membrane can be sent to the water output pipe and discharged. The axis of the gas intake pipe and the axis of the gas conduit are located in the same line c. The path in the gas intake pipe is communicated with the gas intake passage in the gas conduit, and the path and the gas intake passage are co-axial. The gas intake pipe and the gas conduit are coupled such that a bend-free gas passage is formed in them. This is conducive to discharge, from the lower end of the gas conduit under gravity, of the falling solid impurities resulting from dewatering in the gas passage.

Further, the submerged membrane module further comprises a support rod 150 connecting the upper water collection unit and the lower water collection unit. With the support of the support rod between the upper water collection unit and the lower water collection unit, the compression force applied by the upper water collection unit and the lower water collection unit on the hollow fiber membrane is mitigated.

Particularly, there are at least two hollow fiber membranes. A plurality of hollow fiber membranes are uniformly spaced. The plurality of hollow fiber membranes form a filtration set. Two support rods are spaced and positioned vertically, such that the filtration set can be arranged in the space between the two support rods. The two support rods are located at two sides of the filtration set respectively. The two support rods act to restrict the position of the filtration set, and support the upper water collection unit and the lower water collection unit simultaneously. The support of the two support rods is more robust than a single support rod which provides a weaker force. The support rod can also be used to connect the gas conduit with the gas intake pipe. The gas conduit is positioned close to the side wall of the inner cavity, and the side gas hole faces the aeration pipe, such that the gas in the gas intake passage is discharged from the side gas hole toward the aeration pipe.

In an exemplary embodiment, there are two support rods having a hollow structure, and the two support rods are coupled to the gas intake pipe and the water output pipe respectively, wherein the support rod coupled to the gas intake pipe is also coupled to the gas conduit. The support rods can not only provide support, but also act as passages for delivering liquid such as gas and water streams.

In some embodiments of the present application, the open area of the gas intake passage is larger than the open area of the side gas hole. Since the open area of the gas intake passage is larger, the flow rate of the gas stream in the gas intake passage is larger. In contrast, the open area of the side gas hole is smaller. In order to ensure match between the flow rate in the gas intake passage and the discharge from the side gas hole, when the gas stream passes through the side gas hole, the flow velocity of the gas stream discharged from the side gas hole is higher, so the gas stream is ejected over a longer distance toward the aeration pipe. As a result, the gas is closer to the aeration pipe. Particularly, the side gas hole provided at the side wall of the gas conduit has an open area of 28mm²-314 mm².

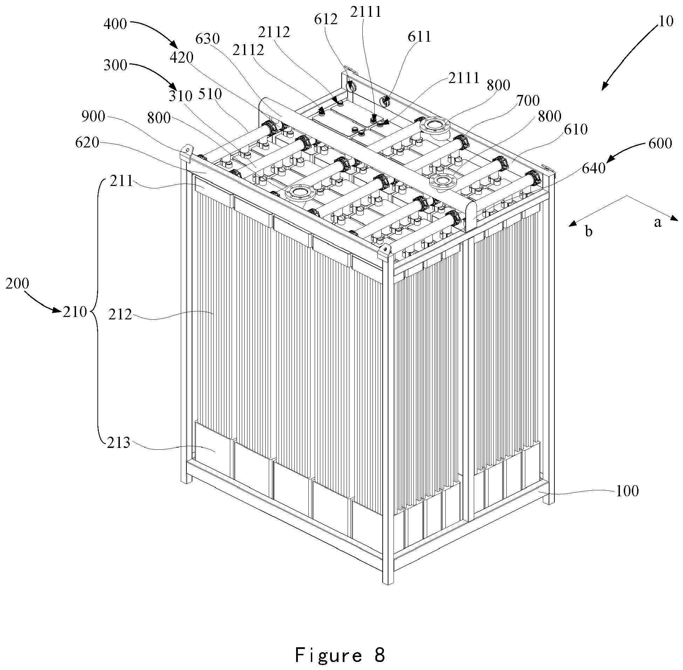

Figure 8 is a schematic view showing the structure of the submerged membrane filtration apparatus provided according to one embodiment of the present application. As shown by Figure 8, the submerged membrane filtration apparatus 10 of the present application comprises a frame 100, at least one membrane element set 200, a water output pipeline 300 and a connecting pipe set 400, wherein

The membrane element set comprises a plurality of membrane elements 210 distributed in a first direction "a", and the membrane element set is disposed in the frame. The upper end of each membrane element is provided with a water output port 2111 which is used to output the filtered water that is filtered by the membrane element. In a specific configuration, the membrane element comprises an upper end cap 211, a hollow fiber membrane 212 and an aerator 213 arranged in sequence. The top end of the upper end cap is provided with a water output port. The hollow fiber membrane is used to filter raw water to produce filtered water. The number of the membrane elements distributed in the first direction a in the membrane element set may be 2, 3, 4, 5 or more.

The water output pipeline comprises at least one branch water output pipe 310 which is fixed to the frame. In a specific configuration, the branch water output pipe is fixed to the upper end of the frame. The number of the branch water output pipe may be 1, 2, 3, 4 or more. In the membrane element set, each two adjacent membrane elements arranged in the first direction "a" constitute a pair of membrane elements, and each pair of membrane elements corresponds to one branch water output pipe.

The connecting pipe set comprises a water output tee pipe which is communicated with two adjacent water output ports and one branch water output pipe. The water output tee pipe is used to gather filtered water and transport it to the branch water output pipe. As compared with the prior art configuration in which each of the membrane elements in the same row is communicated with a respective branch water output pipe, the number of the branch water output pipes is reduced, and the design of the pipeline is simplified. As a result, the installation is also simplified, and the manufacturing cost is reduced.

In order to facilitate cleaning of the hollow fiber membrane, each membrane element is now provided with an aeration gas inlet. Similarly, a plurality of aeration gas inlets residing in the same column are now communicated with one branch gas intake pipe. In other words, each of the membrane elements in the same row is communicated with a respective branch gas intake pipe. In order to simplify the configuration of the aeration pipeline, in a preferred embodiment, the submerged membrane filtration apparatus further comprises an aeration pipeline, and the connecting pipe set further comprises an aeration tee pipe, wherein:
the aeration pipeline comprises at least one branch gas intake pipe 510 which is fixed to the frame. In a specific configuration, the number of the branch gas intake pipe may be 1, 2, 3, 4 or more. The branch gas intake pipe is fixed to the upper end of the frame. The branch gas intake pipe and the branch water output pipe are spaced apart from each other.

The upper end of each membrane element is further provided with an aeration gas inlet 2112 that is spaced from the water output port. The aeration gas inlet is used to input a first gas for cleaning the membrane element. In a specific configuration, the top end of the upper end cap is provided with an aeration gas inlet that is spaced from the water output port, wherein the first gas, i.e. compressed air, is transported through the aeration gas inlet to the aerator which is used to release the compressed air, such that the compressed air scrubs the hollow fiber membrane to prevent clogging of the hollow fiber membrane.

Two aeration gas inlets of two adjacent membrane elements in the first direction "a" are disposed adjacent to each other; and/or the water output ports of two adjacent membrane elements in the first direction "a" are disposed adjacent to each other.

The aeration tee pipe is communicated with two adjacent aeration gas inlets and one branch gas intake pipe. The aeration tee pipe is used to divide and transport the first gas from the branch gas intake pipe into the aeration gas inlets. With the above configuration, each two adjacent membrane elements distributed in the first direction "a" can be communicated with one branch gas intake pipe with the use of one aeration tee pipe. As compared with the prior art configuration in which each of the membrane elements in the same row is communicated with a respective branch gas intake pipe, the number of the branch gas intake pipes is reduced, and the design of the pipeline is simplified. As a result, the installation is also simplified, and the manufacturing cost is reduced. In addition, the branch water output pipe and the branch gas intake pipe are fixed to the upper end of the frame, and the water output tee pipe and the aeration tee pipe are used to communicate the membrane element with the branch water output pipe and the branch gas intake pipe respectively. As such, it's not necessary to use a separate membrane pressing device to immobilize the membrane element. Therefore, the manufacturing cost is reduced, and the installation is easier. To make the membrane element more stable, a membrane element support rod is provided at the bottom of the frame.

Each membrane element is provided with a water output port and an aeration gas inlet. To facilitate arrangement of the branch water output pipe and the branch gas intake pipe, the water output port and the aeration gas inlet of each membrane element may be arranged in the first direction "a". In each membrane element set, two aeration gas inlets or two water output ports of two adjacent membrane elements in the first direction "a" are disposed adjacent to each other. Therefore, two adjacent membrane elements in the first direction "a" have a pair of adjacent aeration gas inlets or water output ports. For example, when the membrane element set includes three membrane elements arranged in the first direction "a", the membrane element set has a pair of adjacent water output ports and a pair of adjacent aeration gas inlets arranged in the first direction "a". Hence, when each membrane element set includes at least three membrane elements, the branch gas intake pipes and branch water output pipes are arranged alternately in the first direction "a". In the above configuration, each of the first membrane element and the last membrane element in each membrane element set has an unpaired water output port or aeration gas inlet. A single-port pipeline may be arranged to communicate this water output port or aeration gas inlet with a respective branch water output pipe or branch gas intake pipe.

To facilitate communication of the water output port with the branch water output pipe and communication of the aeration gas inlet with the branch gas intake pipe, in particular, the branch water output pipe is provided with at least one water intake pipe in communication with itself, wherein the water output tee pipe is communicated with two adjacent water output ports and one water intake pipe; and the branch gas intake pipe is provided with at least one gas delivery pipe in communication with itself, wherein the aeration tee pipe is communicated with two adjacent aeration gas inlets and one gas delivery pipe. In a specific configuration, the water intake pipe is perpendicular to the branch water output pipe, and the gas delivery pipe is perpendicular to the branch gas intake pipe.

In order to optimize the water output pipeline and the aeration pipeline, more particularly, there are a plurality of membrane element sets. The plurality of membrane element sets are arranged in a second direction "b" which is perpendicular to the first direction "a". The branch water output pipe is provided with a plurality of water intake pipes in the second direction "b". The water output ports of the membrane elements arranged in the second direction "b" correspond to the water intake pipes of the same branch water output pipe one by one. The branch gas intake pipe is provided with a plurality of gas delivery pipes arranged in the second direction "b". The aeration gas inlets of the membrane elements arranged in the second direction "b" correspond to the gas delivery pipes of the same branch gas intake pipe one by one. In a specific configuration, the number of the membrane element sets may be 2, 3, 4, 5 or more. The number of the water intake pipes and the number of the gas delivery pipes are generally set to be identical with the number of the membrane element sets. With the above configuration, in each membrane element set, the membrane elements arranged in the first direction "a" form a row. The plurality of membrane element sets arranged in the second direction "b" form a plurality of rows. Therefore, the membrane elements are arranged in a matrix form. The membrane elements in each two adjacent columns are communicated with the same branch water output pipe or branch gas intake pipe via the water output tee pipe or aeration tee pipe. With the above configuration, the number of the branch water output pipes and branch gas intake pipes is reduced greatly, and the water output pipeline and the aeration pipeline are simplified.

When the number of the membrane element sets is too large, i.e. the number of the membrane elements in each column is too large, the branch water output pipe or gas intake pipe corresponding to each column needs to be customized to have the required length. In order to make the branch water output pipe and the gas intake pipe more adaptable, several branch water output pipes or gas intake pipes of a unit length may be connected in series. As such, the branch water output pipe and the gas intake pipe are more versatile, which is conducive to mass production of the branch water output pipes and the gas intake pipes, and also conducive to scale-up of the modularized matrix of the submerged membrane filtration apparatus.

When the number of the membrane elements in each row is very large, in order to achieve uniform distribution of the filtered water in the branch water output pipe, more particularly, the submerged membrane filtration apparatus further comprises a connecting pipeline 600 including a first pipeline 610 and a second pipeline 620, both of which are main water output pipes. One end of the branch water output pipe is communicated with the first pipeline, while the other end of the branch water output pipe is communicated with the second pipeline. The two ends of the gas intake pipe are fixed to the first and second pipelines respectively, but not communicated with the first and second pipelines. In a specific configuration, first connecting openings 611 in the first pipeline are directly opposite to second connecting openings in the second pipeline one by one. One end of the branch water output pipe is communicated with the first connecting opening, while the other end of the branch water output pipe is communicated with the second connecting opening. Second blind holes 612 in the first pipeline are directly opposite to first blind holes in the second pipeline one by one. One end of the branch water output pipe is coupled to the first blind hole, while the other end of the branch water output pipe is communicated with the second blind hole. The second connecting openings and the first blind holes are arranged alternately, and the second blind holes and the first connecting openings are arranged alternately. In the above configuration, the water produced by the membrane element passes through the branch water output pipe, gathers in the first and second lateral pipes, and is discharged from a first collection port in the main water output pipe. A flange connector 800 may be installed on the first collection port. The filtered water may be conveyed to a specified location through an external pipe fitted to the flange connector 800.

When the number of the membrane elements in each row is very large, in order to facilitate delivery of the first gas, the connecting pipeline further comprises a third pipeline 630 which is fixed to the frame and extends in the first direction "a". The third pipeline serves as a main gas intake pipe, located above and communicated with the branch gas intake pipes. In a specific configuration, the third pipeline is spaced from the first and second pipelines. In the above configuration, when the third pipeline serves as a main gas intake pipe, the third pipeline is provided with a second collection port. The first gas, i.e. compressed air, input from the second collection port is distributed from the third pipeline to the branch gas intake pipes at both sides and enters the aerator by which the membrane elements are gas scrubbed.

In a specific configuration, fixing plates 640 are provided at both ends of the third pipeline, and the lower ends of the fixing plates are coupled to the frame. The third pipeline is provided with a plurality of delivery pipes in communication with itself. The plurality of delivery pipes are spaced in the first direction "a", communicated with the branch gas intake pipes, and coupled to but not communicated with the branch water output pipes. When the number of the membrane elements in each column is too large, a plurality of branch water output pipes are linked in series through two horizontal openings of a first tee pipe, and a plurality of gas intake pipes are linked in series through two horizontal openings of a second tee pipe 420. A hoop 700 is used to fix the first tee pipe to the branch water output pipe, and a hoop is used to fix the second tee pipe to the gas intake pipe. The vertical opening of the first tee pipe is not communicated with the delivery pipe, whereas the vertical opening of the second tee pipe is communicated with the delivery pipe.

As it can be appreciated, the third pipeline may also serve as a main water output pipe. Then, the aeration pipeline in the above case is changed into a water output pipeline, wherein the first and second pipelines serve as main gas intake pipes; and the water output pipeline in the above case is changed into an aeration pipeline, wherein the position of the water output port and the position of the aeration gas inlet of the membrane element may be exchanged simplify.

To facilitate maintenance of the pipelines of the submerged membrane filtration apparatus, a lifting lug 900 is provided at the top of the frame. The lifting lug is used for lifting and handling the submerged membrane filtration apparatus. It may be noted that the first pipeline, second pipeline, third pipeline, branch water output pipes and branch gas intake pipes are all disposed at the upper end of the frame. In other words, the pipelines of the submerged membrane filtration apparatus are all located at the top of the frame. When the pipelines need maintenance due to failure, one only needs to lower the liquid level to expose the pipelines at the top of the submerged membrane filtration apparatus. Therefore, it's convenient to maintain the pipelines.

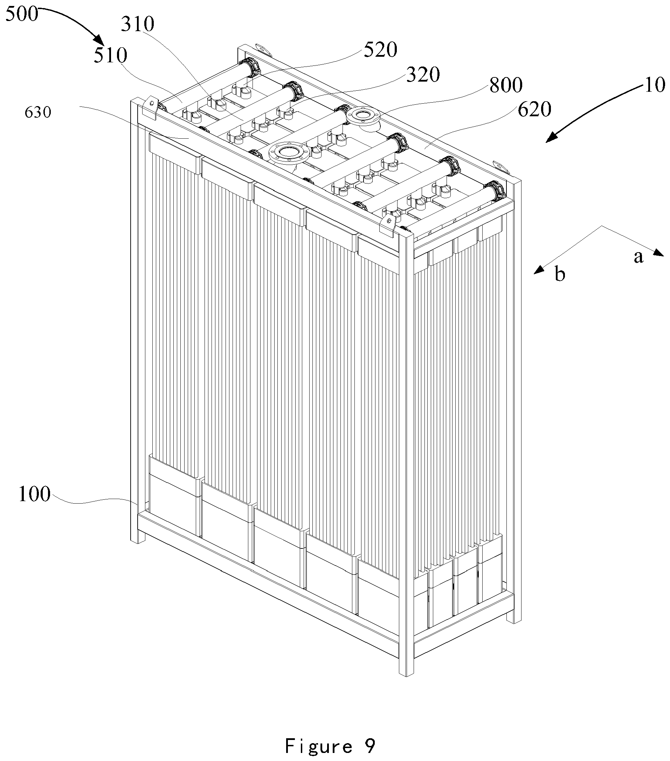

Figure 9 is a schematic view showing the structure of the submerged membrane filtration apparatus provided according to another embodiment of the present application. As shown by Figure 9, in order to configure the branch water output pipe 310 and the branch gas intake pipe 510 included in the aeration pipeline 500 in a reasonable way, in particular, the submerged membrane filtration apparatus 10 further comprises a connecting pipeline comprising a first pipeline and a second pipeline 620 which are spaced in the frame 100. Both the branch water output pipe and the branch gas intake pipe are installed between the first pipeline and the second pipeline, and both the branch water output pipe and the branch gas intake pipe are coupled to the first pipeline and the second pipeline. In a specific configuration, the first and second pipelines extend in the first direction "a". The first pipeline and the second pipeline are disposed at the top of the frame and spaced in the second direction "b". The branch water output pipe and the branch gas intake pipe extend in the second direction "b", and the branch water output pipe and the branch gas intake pipe are perpendicular to the first and second pipelines. The branch water output pipe and the branch gas intake pipe are fixed to the first and second pipelines with hoops.

In order to facilitate gathering of the filtered water, more particularly, the first pipeline serves as a main water output pipe. One end of the branch water output pipe is communicated with the first pipeline, and the other end of the branch water output pipe is fixed to but not communicated with the second pipeline. The main water output pipe is used to gather the filtered water from the branch water output pipes. In a specific configuration, the first pipeline is provided with a first connecting opening in communication with itself, and communicated with one end of the branch water output pipe through the first connecting opening. The branch water output pipe is fixed to the first pipeline with the use of a hoop. The second pipeline is provided with a first blind hole not in communication with itself. The first blind hole is coupled to the other end of the branch water output pipe. Then, the branch water output pipe is fixed to the second pipeline, also with the use of a hoop. The first connecting openings are directly opposite to the first blind holes one by one. In order to facilitate transport of the filtered water gathered in the main water output pipe to a specified location, the main water output pipe is provided with a first collection port in communication with itself. A flange connector 800 may be installed on the first collection port. The filtered water may be transported to the specified location through an external pipe fitted to the flange connector.

In order to facilitate delivery of the first gas, more particularly, the second pipeline serves as a main gas intake pipe. One end of the branch gas intake pipe is communicated with the second pipeline, and the other end of the branch gas intake pipe is fixed to but not communicated with the first pipeline. The main gas intake pipe is used to deliver the first gas to the branch gas intake pipe. In a specific configuration, the second pipeline is further provided with a second connecting opening in communication with itself. The second connecting openings and the first blind holes are disposed alternately. The second pipeline is communicated with one end of the branch gas intake pipe via the second connecting opening, and the branch gas intake pipe is fixed to the second pipeline with the use of a hoop. The first pipeline is further provided with a second blind hole not in communication with itself. The second blind holes and the first connecting openings are disposed alternately. The second blind hole is coupled to the other end of the branch gas intake pipe. Then, the branch gas intake pipe is fixed to the first pipeline, also with the use of a hoop. The second connecting openings are directly opposite to the second blind holes one by one. In order to facilitate delivery of the first gas, the main gas intake pipe is provided with a second collection port in communication with itself. A flange connector may be installed on the second collection port. The first gas is input from an external source to the submerged membrane filtration apparatus through an external pipe fixed to the flange connector.

In order to facilitate communication between the water output port and the branch water output pipe and communication between the aeration gas inlet and the branch gas intake pipe, particularly, the branch water output pipe is provided with at least one water intake pipe 320 in communication with itself. A water output tee pipe is communicated with two adjacent water output ports and one water intake pipe respectively. The branch gas intake pipe is provided with at least one gas delivery pipes 520 in communication with itself. An aeration tee pipe is communicated with two adjacent aeration gas inlets and one gas delivery pipe respectively. In a specific configuration, the water intake pipe is perpendicular to the branch water output pipe, and the gas delivery pipe is perpendicular to the branch gas intake pipe.

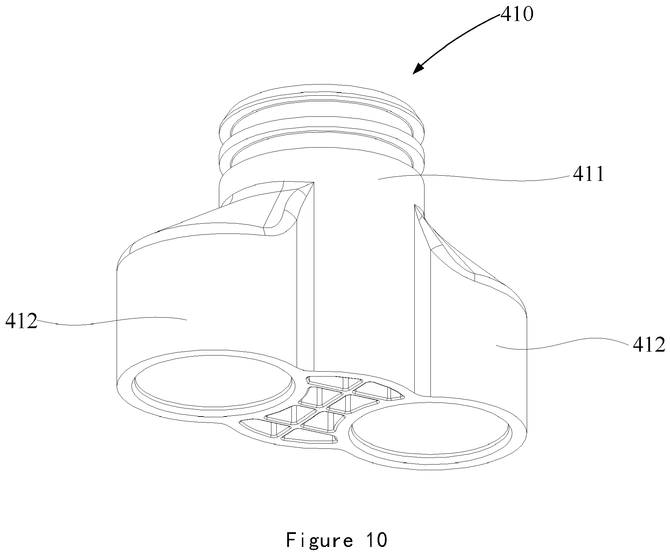

Figure 10 is a schematic view showing the structure of the water output tee pipe provided according to one embodiment of the present application. As shown by Figure 10, in order to facilitate communication of two adjacent water output ports with one branch water output pipe, the water output tee pipe 410 comprises a first water output main pipe 411 and two first water output sub-pipes 412, wherein the two first water output sub-pipes are provided on the wall of the first water output main pipe and spaced apart from each other, and they are communicated with the first water output main pipe.

In a specific configuration, the first water output main pipe and the two first water output sub-pipes are all disposed vertically. The first water output main pipe has a hollow structure open at one end, and the opening ends of the two first water output sub-pipes are opposite to the opening end of the first water output main pipe. The outer wall of the first water output main pipe may further provided with a seal groove. The two first water output sub-pipes have a smooth inner wall. When the water output tee pipe is put into use, two first water output sub-pipes form water tight bell and spigot joints with two adjacent water output ports in each row, and a first water output main pipe forms a water tight bell and spigot joint with a water intake pipe of a branch water output pipe. In particular, the two first water output sub-pipes and the two adjacent water output ports are fitted together by pressing downward to form the bell and spigot joints, and the first water output main pipe and the water intake pipe are fitted together by pressing the branch water output pipe downward to form the bell and spigot joint. In order to enable the water output tee pipe to collect the filtered water in a reasonable way, the inner diameter of the first water output main pipe is larger than the inner diameter of the first water output sub-pipe, such that the distribution of the flow rate of the filtered water is reasonable when the filtered water is collected through the water output tee pipe. The aeration tee pipe comprises a first aeration main pipe and two first aeration sub-pipes. The structure of the aeration tee pipe is similar to that of the water output tee pipe. The structure facilitates splitting of the compressed gas with the aeration tee pipe.

The first membrane element and the last membrane element in each membrane element set each include an unpaired water output port or aeration gas inlet. When they are communicated with a branch water output pipe or a branch gas intake pipe with the use of a respective water output tee pipe or an aeration tee pipe, one only needs to block one of the first water output sub-pipes of the water output tee pipe or one of the first aeration sub-pipes of the aeration tee pipe with a plug to prevent leak.

The various technical features of the above embodiments may be combined in any way. To make the description concise, the present disclosure does not describe all possible combinations of various technical features in the above embodiments. However, as long as there is no contradiction in combinations of these technical features, they should be considered within the scope of this specification.

The above embodiments are only provided to illustrate some embodiments of the present application with specific and detailed description, but it should not be construed that they limit the protection scope claimed by the present application. It should be noted that those skilled in the art can make various changes and modifications without departing from the concept of the present application, all of which fall within the protection scope of the present application. Therefore, the protection scope of the present application shall be based on the accompanying claims.

## Claims

1. An aerator comprising:
a body housing (1100) comprising a hollow inner cavity (1103) and an opening provided at a bottom (1102) of the body housing in communication with the inner cavity;
an aeration pipe (111) running through a top (1101) of the body housing and communicated with the inner cavity; and
a gas conduit (1200) provided inside the inner cavity, wherein one end of the gas conduit runs through the top, and another end of the gas conduit is provided close to the bottom, wherein a gas intake passage (1201) is provided within the gas conduit and extends linearly through both ends of the gas conduit, and wherein a side gas hole (1202) is provided at a side wall of the gas conduit and communicated with the gas intake passage.

2. The aerator of claim 1, further comprising an aeration cup (1300) provided inside the inner cavity, wherein the aeration cup is provided to enclose an end of the aeration pipe that is distal from the top, wherein a flowing passage (1301) is formed between an inner wall of the aeration cup and the aeration pipe.

3. The aerator of claim 2, wherein at least two aeration pipes are provided at and run through the top, and the aeration cup is provided to enclose ends of a plurality aeration pipes.

4. The aerator of claim 1, wherein the gas conduit is provided close to a side wall of the inner cavity, and the side gas hole is provided to face the aeration pipe.

5. The aerator of claim 4, wherein another end of the gas conduit extends to the opening of the bottom.

6. The aerator of claim 5, wherein an end face of the another end of the gas conduit is a slope (1203), the slope is inclined inward of the inner cavity with respect to a plane of the opening, and the slope and the side gas hole face the same side of the gas conduit.

7. The aerator of any one of claims 1-6, wherein an open area of the gas intake passage is larger than an open area of the side gas hole.

8. A submerged membrane module comprising:
a hollow fiber membrane (212);
an upper water collection unit (130) and a lower water collection unit (140) coupled to two ends of the hollow fiber membrane respectively; and
the aerator (213) of any one of claims 1-7, wherein the aerator is coupled to a lower end of the lower water collection unit.

9. The submerged membrane module of claim 8, wherein the upper water collection unit comprises a gas intake pipe (131) in communication with the gas conduit, wherein an axis of the gas intake pipe and an axis of the gas conduit extend along the same straight line.

10. The submerged membrane module of claim 8, further comprising a support rod (150) located between and coupled to the upper water collection unit and the lower water collection unit.

11. A submerged membrane filtration apparatus, comprising a frame (100), at least one membrane element set (200), a water output pipeline (300), and a connecting pipe set (400), wherein:
the membrane element set comprises a plurality of membrane elements (210) distributed in a first direction and provided within the frame, wherein an upper end of each of the membrane elements is provided with a water output port (2111) used to output filtered water that is filtered by the membrane element;
the water output pipeline comprises at least one branch water output pipe (310) fixed to the frame;
the connecting pipe set comprises a water output tee pipe (410) in communication with two adjacent water output ports (2111) and the branch water output pipe respectively, wherein the water output tee pipe is used to gather and transport the filtered water to the branch water output pipe.

12. The submerged membrane filtration apparatus of claim 11, further comprising an aeration pipeline (500), and the connecting pipe set further comprises an aeration tee pipe, wherein:
the aeration pipeline comprises at least one branch gas intake pipe (510) fixed to the frame;
the upper end of each of the membrane elements is further provided with an aeration gas inlet (2112) spaced from the water output port and used to input a first gas for scrubbing the membrane element;
two aeration gas inlets of two adjacent membrane elements in the first direction are disposed adjacent to each other; and/or the water output ports of two adjacent membrane elements in the first direction are disposed adjacent to each other;
the aeration tee pipe is communicated with two adjacent aeration gas inlets and the branch gas intake pipe respectively for dividing and transporting the first gas in the branch gas intake pipe to the aeration gas inlets.

13. The submerged membrane filtration apparatus of claim 12, wherein the branch water output pipe is provided with at least one water intake pipe (320) in communication therewith, wherein the water output tee pipe is communicated with two adjacent water output ports and the water intake pipe respectively; and the branch gas intake pipe is provided with at least one gas delivery pipe (520) in communication therewith, wherein the aeration tee pipe is communicated with two adjacent aeration gas inlets and the gas delivery pipe respectively.

14. The submerged membrane filtration apparatus of claim 13, wherein there are provided a plurality of the membrane element sets laid out in a second direction perpendicular to the first direction, wherein the branch water output pipe is provided with a plurality of the water intake pipes distributed in the second direction, wherein the water output ports of the membrane elements laid out in the second direction correspond to the water intake pipes of the same branch water output pipe one by one, wherein the branch gas intake pipe is provided with a plurality of the gas delivery pipes distributed in the second direction, wherein the aeration gas inlets of the membrane elements laid out in the second direction correspond to the gas delivery pipes of the same branch gas intake pipe one by one.

15. The submerged membrane filtration apparatus of claim 12, further comprising a connecting pipeline (600) comprising a first pipeline (610) and a second pipeline (620) fixed to and spaced apart in the frame, wherein both the branch water output pipe and the branch gas intake pipe are installed between and coupled to the first pipeline and the second pipeline.

16. The submerged membrane filtration apparatus of claim 15, wherein the first pipeline serves as a main water output pipe, wherein one end of the branch water output pipe is communicated with the first pipeline, and another end of the branch water output pipe is fixed to but not communicated with the second pipeline, wherein the main water output pipe is used to gather the filtered water from the branch water output pipe.

17. The submerged membrane filtration apparatus of claim 15, wherein the second pipeline serves as a main gas intake pipe, wherein one end of the branch gas intake pipe is communicated with the second pipeline, and another end of the branch gas intake pipe is fixed to but not communicated with the first pipeline, wherein the main gas intake pipe is used to deliver the first gas to the branch gas intake pipe.

18. The submerged membrane filtration apparatus of claim 15, wherein both the first pipeline and the second pipeline serve as main water output pipes, wherein one end of the branch water output pipe is communicated with the first pipeline, and another end of the branch water output pipe is communicated with the second pipeline, wherein two ends of the branch gas intake pipe are fixed respectively to but not communicated with the first pipeline and the second pipeline.

19. The submerged membrane filtration apparatus of claim 15, wherein the connecting pipeline further comprises a third pipeline (630) fixed to the frame and extending in the first direction, wherein the third pipeline serves as a main gas intake pipe located above the branch gas intake pipe, wherein the third pipeline is communicated with the branch gas intake pipe.

20. The submerged membrane filtration apparatus of claim 11, wherein the water output tee pipe comprises a first water output main pipe (411) and two first water output sub-pipes (412), wherein the two first water output sub-pipes are provided on a wall of the first water output main pipe and spaced apart from each other, and they are communicated with the first water output main pipe.

21. The submerged membrane filtration apparatus of claim 11, wherein the membrane element comprises an upper end cap (211), a hollow fiber membrane (212) and the aerator (213) of any one of claims 1-7 in sequence.
